# EUROPÄISCHE PATENTANMELDUNG

(11) **EP 4 059 791 A1**
(43) Veröffentlichungstag der Anmeldung: **21.09.2022**
(21) Anmeldenummer: 22401006.6
(22) Anmeldetag: 08.03.2022
(51) Int. Cl.: B60T 13/10, B60T 13/26

(54) **BREMSSYSTEM UND LAND- UND/ODER FORSTWIRTSCHAFTLICHES ANHÄNGERFAHRZEUG MIT EINEM BREMSSYSTEM**

(30) Priorität: 17.03.2021 DE 102021106484
(71) Anmelder: Amazonen-Werke H. Dreyer SE & Co. KG, 49205 Hasbergen (DE)
(72) Erfinder: Brinkmann, Stefan, 49143 Bissendorf-Natbergen (DE); Keuchel, Christian, 27726 Worpswede (DE)

(57) **Zusammenfassung**

Pneumatisch und/oder hydraulisch betreibbares Bremssystem (10), umfassend zumindest eine Bremseinrichtung (11A, 11B) die mit einem Laufrad (12A, 12B) koppelbar und mit einem Bremsdruck beaufschlagbar ist, wobei die Bremseinrichtung (11A, 11B) dazu eingerichtet ist, eine Abbremsung in Abhängigkeit des Bremsdrucks zu erzeugen, und zumindest ein Bremskraftregler (14) mit einstellbarem Regelverhältnis der mit einem Steuerdruck beaufschlagbar und dazu eingerichtet ist, den Bremsdruck in Abhängigkeit des Steuerdrucks und des Regelverhältnisses einzustellen. Um ein vielseitig einsetzbares und dabei besonders einfaches Bremssystem (10) zu schaffen, dass die Bauteilvielfalt bisheriger Bremssysteme (10), insbesondere Bremskraftregler (14), weiter reduziert, ist vorgesehen, dass das Regelverhältnis zwischen einem oberen und unteren Grenzregelverhältnis einstellbar ist, und dass dem Bremskraftregler (14) zumindest eine Verstelleinrichtung (20) zugeordnet ist die dazu eingerichtet ist, dass Regelverhältnis zwischen dem oberen und unteren Grenzregelverhältnis einzustellen.

## Beschreibung

Die Erfindung betrifft ein Bremssystem gemäß dem Oberbegriff des Patentanspruches 1 und ein land- und/oder forstwirtschaftliches Anhängerfahrzeug gemäß dem Oberbegriff des Patentanspruches 11.

In einer Vielzahl von Anwendungsfällen, insbesondere in der Land- und/oder Forstwirtschaft, werden pneumatisch und/oder hydraulisch betreibbare Bremssysteme zur Verzögerung und/oder Abbremsung von Fahrzeugen und/oder Anhängerfahrzeugen eingesetzt. Um eine entsprechende Zulassung derartiger Fahrzeuge und/oder Anhängerfahrzeuge innerhalb und/oder außerhalb des öffentlichen Verkehrsbereiches zu erlangen, müssen derartige Bremssysteme unter anderem verschiedene gesetzliche Vorgaben erfüllen. Diese Vorgaben umfassen auch die erforderliche Bremswirkung und/oder Bremskraft, insbesondere den Grad der Verzögerung und/oder Abbremsung, in Abhängigkeit der Fahrzeug- und/oder Anhängerfahrzeugspezifikation und/oder deren Einsatzbedingungen. Dementsprechend müssen derartige Bremssysteme auf das jeweilige Fahrzeug und/oder Anhängerfahrzeug und/oder das Einsatzgebiet abgestimmt und/oder konfiguriert sein. Neben einer bedarfsgerechten Dimensionierung des Bremssystems wird hierzu typischerweise ein innerhalb des Fahrzeugs und/oder Anhängerfahrzeugs, insbesondere des Bremssystems, angeordneter Bremskraftregler eingesetzt.

Gattungsgemäße Bremskraftregler passen hierbei einen vorgebbaren Steuerdruck mit dem das Bremssystem beaufschlagbar ist, auf einen erforderlichen Bremsdruck zur Abbremsung und/oder Verzögerung des Fahrzeugs und/oder Anhängerfahrzeugs an. Das Bremssystem ist dabei je nach Ausführungsform pneumatisch, insbesondere mit Druckluft, und/oder hydraulisch, insbesondere mit einer Hydraulikflüssigkeit, betreibbar. Neben automatischen lastabhängigen Bremskraftreglern, auch ALB's genannten, werden hierbei auch manuell und/oder handbetätigte Bremskraftregler verwendet. Bei beiden Varianten ist der Bremsdruck in Abhängigkeit des am Bremskraftregler einstellbaren Regelverhältnisses und des vorgebbaren Steuerdrucks anpassbar. Der Steuerdruck ist dabei von einer pneumatischen und/oder hydraulischen Fördereinrichtung, insbesondere Pumpe, und/oder einer Bremsbetätigungseinrichtung, beispielsweise einem Bremspedal, generierbar und/oder beeinflussbar.

Ein derartiges Bremssystem ist beispielsweise in der DE 10 2009 046 684 B4 beschrieben. Das pneumatisch und/oder hydraulisch betreibbare Bremssystem umfasst hierbei zumindest eine Bremseinrichtung die mit einem Laufrad koppelbar und mit einem Bremsdruck beaufschlagbar ist, wobei die Bremseinrichtung dazu eingerichtet ist, eine Abbremsung, insbesondere eine Verzögerung am Laufrad und somit am Fahrzeug und/oder Anhängerfahrzeug, in Abhängigkeit des Bremsdrucks zu erzeugen. Darüber hinaus umfasst das Bremssystem zumindest einen Bremskraftregler mit einstellbarem Regelverhältnis der mit einem Steuerdruck beaufschlagbar und dazu eingerichtet ist, den Bremsdruck in Abhängigkeit des Steuerdrucks und des Regelverhältnisses einzustellen.

Diese und andere im Stand der Technik bekannte Bremssysteme passen das Regelverhältnis in Abhängigkeit einer Federungsanlage, insbesondere deren Federweg, und somit einem Beladungszustand des Fahrzeugs und/oder Anhängerfahrzeuges an. Besonders nachteilig an diesen Bremssystemen ist die Tatsache, dass für unterschiedlich spezifizierte Fahrzeuge und/oder Anhängerfahrzeuge, insbesondere Bremssysteme, zumindest teilweise unterschiedliche Bremskraftregler, insbesondere mit unterschiedlichen Regelverhältnissen, und/oder Zusatzkomponenten für den Bremskraftregler notwendig sind. Die Zusatzkomponenten dienen dabei dazu, den Bremskraftregler mit der Federungsanlage des Fahrzeugs und/oder Anhängerfahrzeugs zu koppeln. Als Zusatzkomponenten sind beispielsweise Stellhebel bekannt, die mit einer ersten Seite mit dem Bremskraftregler und mit einer zweiten Seite, insbesondere mittels zumindest eines Verbindungselementes, mit der Federungsanlage verbunden sind, wobei der Stellhebel im Bereich des Bremskraftreglers drehbar gelagert ist. Je nach Ausführungsform erfordert dies bei unterschiedlich spezifizierten Fahrzeugen und/oder Anhängerfahrzeugen zumindest teilweise variierende Zusatzkomponenten und/oder Bremskraftregler um das benötigte Regelverhältnis, insbesondere die benötigte Bremskraft, einzustellen und/oder zu erreichen. Dies wiederrum erhöht besonders die Bauteilvielfalt und/oder den Montageaufwand bisheriger Bremssysteme.

Die DE 10 2009 046 684 B4 schlägt hierzu eine zwischen der Federungsanlage und dem Bremskraftregler angeordnete Transformationseinheit vor, über die der Bremskraftregler fluidleitend mit der Federungsanlage verbunden ist und die es erlaubt den Druck der Federungsanlage in einen für den Bremskraftregler geeigneten Steuerdruck anzupassen. Dieses Bremssystem hat jedoch den Nachteil, dass dieses zum einen besonders Aufwändig ist und zum anderen bei unterschiedlich spezifizierten Fahrzeugen und/oder Fahrzeuganhängern zumindest teilweise unterschiedliche Bremskraftregler erfordert. Darüber hinaus weist dieses Bremssystem den entscheidenden Nachteil auf, dass dieses auf Fahrzeuge und/oder Fahrzeuganhänger mit einer Federungsanlage beschränkt ist. Insbesondere im Bereich der land- und/oder fortwirtschaftlichen Fahrzeuge und/oder Anhängerfahrzeuge sind jedoch bauartbedingt häufig keine Federungsanlagen vorhanden.

Aus der EP 2 014 528 B1 ist ein landwirtschaftliches Anhängerfahrzeug nach der eingangs genannten Art bekannt, wobei das landwirtschaftliche Anhängerfahrzeug zumindest eine beladbare und/oder entleerbare Materialaufnahmevorrichtung, insbesondere einen Vorratsbehälter, umfasst. Der Bremskraftregler, insbesondere das Regelverhältnis, ist hierbei über einen Füllstand innerhalb der Materialaufnahmevorrichtung, der insbesondere mittels zumindest einer Sensoreinrichtung erfassbar ist, einstellbar.

Diese Bremssysteme haben jedoch den Nachteil, dass hierbei zumindest teilweise variierende Bremskraftregler, insbesondere Regelverhältnisse, je nach Spezifikation des Anhängerfahrzeugs erforderlich sind. Darüber hinaus ist das hier vorgeschlagene Bremssystem auf Anhängerfahrzeuge mit zumindest einer Materialaufnahmevorrichtung, insbesondere einem Vorratsbehälter, beschränkt und somit für land- und/oder forstwirtschaftliche Anhängerfahrzeuge, die beispielsweise in Form von Bodenbearbeitungsmaschinen mit oder ohne Federungsanlage ausgebildet sind, ungeeignet.

Die der Erfindung zugrunde liegende Aufgabe besteht somit darin, ein Bremssystem so zu gestalten, dass die beschriebenen Nachteile aus dem Stand der Technik zumindest teilweise behoben sind. Insbesondere soll ein vielseitig einsetzbares und dabei besonders einfaches Bremssystem geschaffen werden, dass die Bauteilvielfalt bisheriger Bremssysteme, insbesondere Bremskraftregler, weiter reduziert.

Diese Aufgabe wird erfindungsgemäß dadurch gelöst, dass das Regelverhältnis zwischen einem oberen und unteren Grenzregelverhältnis einstellbar ist, wobei dem Bremskraftregler zumindest eine Verstelleinrichtung zugeordnet ist die dazu eingerichtet ist, dass Regelverhältnis zwischen dem oberen und unteren Grenzregelverhältnis einzustellen.

Die Erfindung macht sich die Erkenntnis zunutze, dass der Bereich zwischen dem oberen und unteren Grenzregelverhältnis eines Bremskraftreglers typischerweise so groß ist, dass er mehrere für unterschiedlich spezifizierte Fahrzeuge und/oder Anhängerfahrzeuge zulässige Regelverhältnisse abdeckt. Das Regelverhältnis des jeweiligen Bremskraftreglers kann hierbei mittels der Verstelleinrichtung derartig angepasst werden, dass die Bremswirkung und/oder Bremskraft, insbesondere der Grad der Verzögerung und/oder Abbremsung, innerhalb eines von den gesetzlichen Vorgaben vorgegebenen zulässigen Bereiches des jeweiligen Fahrzeugs und/oder Anhängerfahrzeuges liegt. Somit können folglich gleiche Typen von Bremskraftreglern, insbesondere zumindest teilweise gleiche Konfigurationen von Bremssystemen, für unterschiedliche Fahrzeuge und/oder Anhängerfahrzeuge genutzt werden.

Das obere Grenzregelverhältnis stellt hierbei bevorzugt die geringstmögliche Anpassung des Steuerdrucks, insbesondere eines Eingangsdrucks, mit dem jeweiligen Bremskraftregler dar. Dies kann maximal ein zumindest nahezu nicht angepasster Steuerdruck, insbesondere ein Ausgangsdruck, sein. Das untere Grenzregelverhältnis ist dabei die maximal mögliche Anpassung, insbesondere Untersetzung, des Steuerdrucks, insbesondere des Ausgangsdrucks, die mit dem jeweiligen Bremskraftregler erreichbar ist. Dementsprechend bedeutet eine Anpassung des Regelverhältnisses ausgehend vom oberen Grenzregelverhältnis in Richtung des unteren Grenzregelverhältnisses eine Vergrößerung des Regelverhältnisses.

Die Verstelleinrichtung ist bevorzugt von außen am Bremskraftregler angeordnet. Alternativ hierzu kann die Verstelleinrichtung auch im Bereich, insbesondere zumindest teilweise innerhalb oder außerhalb, am Bremskraftregler angeordnet sein. Insbesondere eine von außen am Bremskraftregler anordenbare Verstelleinrichtung hat den entscheidenden Vorteil, dass somit auch bestehende Bremssysteme, insbesondere Bremskraftregler, besonders einfach mit der erfindungsgemäßen Verstelleinrichtung nachrüstbar sind.

Alternativ oder zusätzlich ist jedoch auch denkbar, dass die Verstelleinrichtung zumindest teilweise innerhalb des Bremskraftreglers angeordnet ist.

Ferner weist der innerhalb des erfindungsgemäßen Bremssystems verwendete Bremskraftregler bevorzugt zumindest eine Steuerdruckzuleitung auf, die mit einem Druckbereitstellungssystem eines Fahrzeugs und/oder Anhängerfahrzeugs verbindbar ist, sodass der Bremskraftregler mit einem vom Fahrzeug und/oder Anhängerfahrzeug bereitgestellten Steuerdruck beaufschlagbar ist. Vorzugsweise ist der Bremskraftregler dazu eingerichtet, den Druck des Steuerdrucks in Abhängigkeit des über die Verstelleinrichtung eingestellten Regelverhältnisses am Bremskraftregler anzupassen und den druckangepassten Steuerdruck in Form eines Bremsdrucks über zumindest einen Bremsdruckausgang aus dem Bremskraftregler auszuleiten.

In einer bevorzugten Ausführungsform des erfindungsgemäßen Bremssystems weist die Verstelleinrichtung zumindest ein, vorzugsweise rotatorisch, verstellbares mit dem Bremskraftregler verbundenes Stellelement und zumindest ein, vorzugsweise translatorisch, verstellbares Schieberelement auf, wobei das zumindest eine Stellelement und das zumindest eine Schieberelement miteinander gekoppelt sind. Die Verstellung des Stell- und/oder Schieberelementes steht dabei in Wechselwirkung mit dem Regelverhältnis des Bremskraftreglers. Vorzugsweise ist der Verstellbereich des Stell- und/oder Schieberelementes derartig ausgelegt, dass das Regelverhältnis des Bremskraftreglers über den gesamten Einstellbereich zwischen dem oberen und unteren Grenzregelverhältnis einstellbar ist. Besonders bevorzugt ist bei einem rotatorisch verstellbaren Stellelement ein Verstellwinkel von etwa 20° oder 30°, insbesondere 40°, erreichbar. Alternativ ist hierbei jedoch auch ein Verstellwinkel von etwa 60° oder 90° denkbar. Der Verstellwinkel wird dabei von einer Ausgangsstellung, insbesondere einer ersten Stellung, des Stellelementes und/oder des Bremskraftreglers gemessen, insbesondere bei der Stellung bei der der Steuerdruck die geringst mögliche Anpassung durch den Bremskraftregler erfährt.

Das Stell- und/oder Schieberelement ist hierbei bevorzugt derartig miteinander gekoppelt, dass eine Verschiebung und/oder Verdrehung des Schieberelementes zumindest teilweise mit einer Verschiebung und/oder Verdrehung des Stellelementes korrespondiert. Alternativ oder zusätzlich kann zwischen dem Stell- und/oder Schieberelement eine Über- oder Untersetzung ausgebildet sein. Somit ist erreicht, dass das Regelverhältnis des Bremskraftreglers besonders präzise verstellbar ist.

In einer Weiterbildung des erfindungsgemäßen Bremssystems sind das Schieberelement und das Stellelement zumindest teilweise formschlüssig miteinander verbunden. Vorzugsweise weisen das Stell- und/oder Schieberelement jeweils zueinander korrespondierende Vorsprünge und/oder Hinterschneidungen auf, wobei die Vorsprünge und/oder Hinterschneidungen bevorzugt zumindest teilweise am Umfang des Stell- und/oder Schieberelementes angeordnet sind. Besonders bevorzugt sind das Stell- und/oder Schieberelement nach Art eines Getriebes ausgebildet. Ferner ist ein zumindest teilweise als Zahnradgetriebe ausgebildetes Getriebe, das aus dem Stell- und/oder Schieberelement gebildet ist, besonders bevorzugt, wobei insbesondere das Schieberelement zumindest teilweise als Zahnstange und das Stellelement zumindest teilweise als Zahnsegment ausgebildet sind. In einer alternativen Ausführungsform ist das Getriebe zumindest teilweise als Schneckengetriebe ausgebildet, wobei das Schieberelement als eine Schneckenwelle und/oder das Stellelement als ein dazu korrespondierendes Schneckenrad ausgebildet sind. Alternativ sind hierbei auch andere Ausführungsformen von Getrieben denkbar.

Mittels dieser Ausführungsform ist erreicht, dass das Stellelement und das Schieberelement besonders betriebssicher miteinander gekoppelt sind.

In einer anderen bevorzugten Ausführungsform des erfindungsgemäßen Bremssystems sind das zumindest eine Stellelement und/oder das zumindest eine Schieberelement in einer ersten und/oder zweiten Stellung verbringbar, wobei das Regelverhältnis, insbesondere zwischen dem oberen und unteren Grenzregelverhältnis, in Abhängigkeit der Stellung einstellbar ist. Die erste und/oder zweite Stellung sind bevorzugt je nach Spezifikation des Fahrzeuges und/oder Anhängerfahrzeuges, insbesondere je nach dem zulässigen Bereich des Regelverhältnisses, anpassbar. Die erste Stellung kann hierbei mindestens eine Ausgangsstellung des Stell- und/oder Schieberelementes darstellen, bei dem das obere Grenzregelverhältnis und/oder das geringstmögliche Regelverhältnis des Bremskraftreglers eingestellt ist. Die zweite Stellung kann dabei maximal eine Stellung des Stell- und/oder Schieberelementes sein, bei dem das untere Grenzregelverhältnis und/oder das größtmögliche Regelverhältnis des Bremskraftreglers eingestellt ist. Mittels dieser Ausführungsform kann beispielsweise ein Bediener und/oder ein dem Bremssystem zugeordnetes Steuer- und/oder Regelsystem die Stellung und somit das eingestellte Regelverhältnis des Bremskraftreglers in besonders einfacherweise anpassen und/oder erfassen.

In einer anderen Weiterbildung des erfindungsgemäßen Bremssystems weist die Verstelleinrichtung zumindest ein erstes Einstellmittel auf, wobei die erste Stellung mittels des ersten Einstellmittels anpassbar ist. Das zumindest eine erste Einstellmittel ist hierbei bevorzugt mit dem Stell- und/oder Schieberelement gekoppelt. Besonders bevorzugt ist ein zumindest teilweise als Schraube ausgebildetes Einstellmittel. Das Einstellmittel ist bevorzugt manuell von einem Bediener mittels eines Werkzeuges verstell- und/oder bedienbar. In einer alternativen oder zusätzlichen Ausführungsform ist das Einstellmittel auch werkzeuglos verstell- und/oder bedienbar. Insbesondere ist eine Übersetzung zwischen der Verstellung des Einstellmittels und der Verstellung des Stell- und/oder Schieberelementes ausgebildet. Bei einem als Schraube ausgebildeten Einstellmittel ist die Übersetzung über die Steigung des Gewindes der Schraube anpassbar. Ferner ist ein Einstellmittel bevorzugt das zumindest teilweise als Anschlag ausgebildet ist oder mittels dem zumindest ein dem Stell- und/oder Schieberelement zugeordneter Anschlag verstellbar ist. Eine derartige Ausführungsform erlaubt eine besonders einfache und/oder gut zugängliche Verstellung der Verstelleinrichtung, insbesondere des Schieber- und/oder Stellelementes, und/oder des Bremskraftreglers.

In einer weiteren bevorzugten Ausführungsform des erfindungsgemäßen Bremssystems weist die Verstelleinrichtung zumindest ein zweites Einstellmittel auf, wobei die zweite Stellung mittels des zweiten Einstellmittels anpassbar ist. Das Stell- und/oder Schieberelement ist somit je nach Stellung bevorzugt an dem ersten und/oder zweiten Einstellmittel, insbesondere einem von dem ersten und/oder zweiten Einstellmittel verstellbaren ersten und/oder zweiten Anschlag, anlegbar. Mittels dieser Ausführungsform ist die erste und zweite Stellung unabhängig voneinander einstellbar. Insbesondere Einstellungs- und/oder Bedienungsfehler während der Einstellung der Regelverhältnisse sind somit zumindest nahezu ausgeschlossen.

In einer weiteren Weiterbildung des erfindungsgemäßen Bremssystems sind das Stellelement und/oder das Schieberelement fernbetätigt, vorzugsweise mittels eines Fluids oder Aktors, verstellbar. Das Stell- und/oder Schieberelement ist dabei bevorzugt von einem Bediener und/oder einem dem Fahrzeug und/oder Anhängerfahrzeug zugeordneten Steuer- und/oder Regelsystem betätigbar und/oder verstellbar. Das Fahrzeug und/oder Anhängerfahrzeug kann dabei zumindest ein Bedien- und/oder Anzeigemittel umfassen über das eine Verstellung der Verstelleinrichtung, insbesondere des Stell- und/oder Schieberelementes, auslösbar ist. Die Verstellung des Stell- und/oder Schieberelementes ist hierbei elektrisch über zumindest eine Signalleitung und/oder mechanisch, insbesondere pneumatisch und/oder hydraulisch, ausführbar. Hierzu wird vorzugsweise eine Kraft und/oder ein Moment in die Verstelleinrichtung eingeleitet, die das Stell- und/oder Schieberelement zumindest teilweise von der ersten in die zweite Stellung oder umgekehrt verstellt, insbesondere verschiebt. Somit ist insbesondere der Bedienungskomfort zur Verstellung des Regelverhältnisses in besonderer Weise gesteigert.

In einer alternativen jedoch bevorzugten Ausführungsform ist die Verstelleinrichtung, insbesondere das Stell- und/oder Schieberelement, über ein manuell, vorzugsweise handbetätigt, verstellbares Bedienmittel, insbesondere einen Hebel, verstellbar. Die Verstellung der Verstelleinrichtung, insbesondere des Stell- und/oder Schieberelementes, ist somit besonders einfach ausgebildet.

Darüber hinaus kann die Verstelleinrichtung, insbesondere das Stell- und/oder Schieberelement, bevorzugt über ein motorisch antriebbares Stellglied und/oder einen Arbeitszylinder verstellbar sein.

Darüber hinaus ist eine erfindungsgemäßes Bremssystems bevorzugt bei dem dem Stellelement und/oder Schieberelement zumindest ein Federelement zugeordnet ist das dazu eingerichtet ist, dass Stellelement und/oder Schieberelement, vorzugsweise in eine definierte Richtung, zu verstellen. Das Stell- und/oder Schieberelement ist somit mittels des Federelementes, vorzugsweise in Richtung der ersten Stellung, vorspannbar. Im Falle einer Betriebsstörung ist somit erreicht, dass das Stell- und/oder Schieberelement, vorzugsweise selbsttätig mittels einer von dem Federelement wirkenden Rückstellkraft, zumindest teilweise in Richtung der ersten Stellung verstellbar ist. Somit wird bei einer Betriebsstörung des Fahrzeugs und/oder Anhängerfahrzeugs, insbesondere der Verstelleinrichtung, das geringstmögliche Regelverhältnis, insbesondere die geringstmögliche Anpassung des Steuerdrucks, am Bremskraftregler eingestellt und so sichergestellt, dass das zulässige Regelverhältnis auch bei einer Störung eingehalten wird. Das Federelement ist erfindungsgemäß bevorzugt als Schraub- oder Drehfeder, insbesondere Spiralfeder, ausgebildet. Das Federelement ist hierbei bevorzugt am Stell- und/oder Schieberelement und/oder am Bremskraftregler angeordnet.

In einer anderen bevorzugten Ausführungsform des erfindungsgemäßen Bremssystems ist das zumindest eine Stellelement form- und/oder kraftschlüssig mit dem Bremskraftregler verbindbar. Zwischen dem Bremskraftregler und dem Stellelement ist dabei bevorzugt zumindest ein Mitnehmer- und/oder Stiftelement angeordnet. Die Verbindung ist dabei alternativ oder zusätzlich kraftübertragend ausgebildet. Besonders bevorzugt ist hierbei eine Verbindung die zumindest teilweise nach Art einer Welle-Nabe-Verbindung ausgeführt ist. Ferner ist eine Ausführungsform besonders bevorzugt bei der zumindest einer Einstellwelle, die mit dem Bremskraftregler verbunden ist oder die einen Teil des Bremskraftreglers bildet, ein erstes Mitnehmer- und/oder Stiftelement zugeordnet, dass auf der einen Seite mit der Einstellwelle, insbesondere dem Bremskraftregler, und auf der anderen Seite mit dem Stellelement gekoppelt ist. Darüber hinaus ist dem Stellelement bevorzugt zumindest ein zweites Mitnehmer- und/oder Stiftelement zugeordnet, dass auf der einen Seite mit dem Stellelement und auf der anderen Seite mit einer Rückstelleinrichtung, insbesondere einem Federelement, gekoppelt ist. Ferner kann alternativ oder zusätzlich zwischen dem Bremskraftregler und dem Stellelement zumindest eine Schraubverbindung angeordnet sein. Mittels dieser Ausführungsform ist eine besonders betriebssichere Verbindung zwischen dem Stellelement und dem Bremskraftregler erreicht.

Bei einer besonders bevorzugten Ausführungsform des erfindungsgemäßen Bremssystems umfasst die Verstelleinrichtung zumindest ein Gehäuse, wobei das zumindest eine Stellelement und das zumindest eine Schieberelement zumindest teilweise, vorzugsweise vollständig, innerhalb des Gehäuses angeordnet sind. Das Stellelement und/oder das Schieberelement sind somit vor äußeren Einflüssen besonders gut geschützt, womit die Betriebssicherheit der Verstelleinrichtung und somit des Bremssystems noch weiter gesteigert ist. Das erste und/oder zweite Einstellmittel sind dabei für eine besonders einfache Zugänglichkeit bevorzugt zumindest teilweise außerhalb des Gehäuses angeordnet. Alternativ oder zusätzlich umfasst das Gehäuse über gas- und/oder flüssigkeitsdichte, insbesondere staub- und/oder wasserdichte, Abdichtmittel und ist somit zumindest teilweise gas- und/oder flüssigkeitsdicht, insbesondere staubund/oder wasserdicht, ausgebildet.

Die der Erfindung zugrunde liegende Aufgabe wird ferner innerhalb eines land- und/oder fortwirtschaftlichen Anhängerfahrzeuges der eingangs genannten Art gelöst, wobei das Bremssystem nach zumindest einem der vorstehenden beschriebenen Ausführungsformen ausgebildet ist. Hinsichtlich der Vorteile und Modifikationen des erfindungsgemäßen land- und/oder fortwirtschaftlichen Anhängerfahrzeuges wird zunächst auf die Vorteile und Modifikationen des erfindungsgemäßen Bremssystems verwiesen.

Das land- und/oder forstwirtschaftliche Anhängerfahrzeug umfasst zumindest ein Laufrad, vorzugsweise mehrere Laufräder, mit dem, vorzugsweise mit denen, zumindest eine Bremseinrichtung des erfindungsgemäßen Bremssystems gekoppelt ist. Die zumindest eine Bremseinrichtung ist hierbei bevorzugt als eine mit Druck, insbesondere Bremsdruck, beaufschlagbare Trommel- oder Scheibenbremse ausgebildet.

Das land- und/oder forstwirtschaftliche Anhängerfahrzeug ist vorzugsweise als eine gezogene Arbeitsmaschine ausgebildet. Insbesondere ist das landwirtschaftliche Anhängerfahrzeug als eine Bodenbearbeitungsmaschine, beispielsweise in Form eines Pflugs oder Grubbers, ausgebildet. Darüber hinaus ist das land- und/oder forstwirtschaftliche Anhängerfahrzeug vorzugsweise als forstwirtschaftliche Bearbeitungsmaschine, insbesondere mit zumindest einem Holzbearbeitungswerkzeug, ausgebildet.

Das Fahrzeug ist ferner bevorzugt in einer Betrieb- oder Außerbetriebsstellung, insbesondere Transportstellung, betreibbar. Somit kann das land- und/oder fortwirtschaftliche Anhängerfahrzeug sowohl auf einer zu bearbeitenden Nutzfläche als auch im öffentlichen Straßenverkehr genutzt werden. Das erfindungsgemäße Bremssystem ist dabei derartig auslegbar, dass mit dem einstellbaren Regelverhältnis die gesetzlichen Vorgaben der erforderlichen Bremswirkung bis zu einer Höchstgeschwindigkeit von bis zu 50 km/h, insbesondere 40 km/h oder 30 hm/h, erfüllt sind.

Darüber hinaus ist das land- und/oder forstwirtschaftliche Anhängerfahrzeug bevorzugt als eine Verteil- und/oder Ausbringmaschine ausgebildet. Hierunter sind insbesondere Feldspritzen oder Sä- und/oder Düngermaschinen zu verstehen die bevorzugt zumindest eine Materialaufnahmevorrichtung, insbesondere einen Vorratsbehälter, zum Vorhalten von granularem und/oder flüssigem Material umfassen. Alternativ kann das Anhängerfahrzeug auch als forstwirtschaftliche Holzbearbeitungs- und/oder Transportmaschine mit zumindest einer Materialaufnahmevorrichtung ausgebildet sein.

Die Materialaufnahmevorrichtung ist hierbei bis zu einer maximalen Beladung mit Material befüllbar und je nach Ausführungsform, insbesondere während des Verteil- und/oder Ausbringvorgangs, entleerbar. Das Anhängerfahrzeug kann somit zumindest zwei Beladungszustände, insbesondere einen Leerzustand oder einen beladenen Zustand, aufweisen, wobei ein beladener Zustand bevorzugt auch einen teilbeladenen Zustand darstellt. Erfindungsgemäß ist die erste Stellung des Stell- und/oder Schieberelementes, insbesondere ein geringeres Regelverhältnis des Bremskraftreglers, dem beladenen Zustand zugeordnet während die zweite Stellung, insbesondere ein höheres Regelverhältnis des Bremskraftreglers, dem Leerzustand zugeordnet ist.

In einer besonders bevorzugten Weiterbildung des erfindungsgemäßen Anhängerfahrzeugs ist die Verstelleinrichtung, insbesondere das zumindest eine Stell- und/oder Schieberelement, in Abhängigkeit des Beladungszustandes der Materialaufnahmevorrichtung verstellbar.

Weitere Einzelheiten der Erfindung sind der Beispielsbeschreibung und den Zeichnungen zu entnehmen. Die Zeichnungen zeigen
- Fig.1: ein erstes Ausführungsbeispiel eines erfindungsgemäßen Bremssystems in einer schematischen Darstellung;
- Fig.2A: ein erstes Ausführungsbeispiel einer erfindungsgemäßen Verstelleinrichtung in einer ersten Stellung in Schnittansicht;
- Fig.2B: die Verstelleinrichtung aus Fig.2A in einer verstellten Stellung;
- Fig.3: ein zweites Ausführungsbeispiel eines erfindungsgemäßen Bremssystems in einer schematischen Darstellung;
- Fig.4A: ein zweites Ausführungsbeispiel einer erfindungsgemäßen Verstelleinrichtung in einer ersten Stellung in Schnittansicht; und
- Fig.4B: die Verstelleinrichtung aus Fig.4A in einer zweiten Stellung.

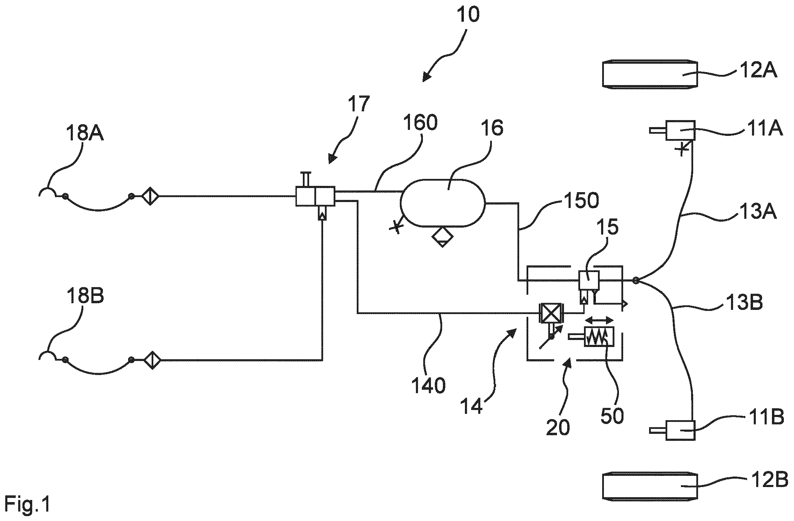

Ein innerhalb eines land- und/oder forstwirtschaftlichen Anhängerfahrzeuges ausgebildetes pneumatisches und/oder hydraulisches Bremssystem 10 ist in der Fig.1 gezeigt. Das hier dargestellte erste Ausführungsbeispiel ist als ein Zweileitungs-Bremssystem 10 ausgebildet und über eine Vorratskupplung 18A und eine Bremskupplung 18B mit einem in den Figuren nicht gezeigten landwirtschaftlichen Zugfahrzeug fluidleitend gekoppelt. Somit wird dem Bremssystem 10 für den Betrieb ein über die Vorratskupplung 18A einleitbarer Vorratsdruck und ein über die Bremskupplung 18B einleitbarer Steuerdruck, die jeweils von einem innerhalb des Zugfahrzeuges angeordneten Druckbereitstellungssystem generiert werden, bereitgestellt. Der Steuerdruck wird hierbei zusätzlich von einem Bediener bzw. Fahrer mittels einer Bremsbetätigungseinrichtung, insbesondere einem Bremspedal, innerhalb einer Fahrerkabine des Zugfahrzeuges bedarfsweise beeinflusst. Ausgehend von einem in an sich bekannter Weise ausgebildeten Löseventil 17 wird der Vorratsdruck über eine Speicherdruckzuleitung 160 in einen Vorratsdruckspeicher 16, der innerhalb des Anhängerfahrzeuges angeordnet ist, gefördert, während der Steuerdruck über eine Steuerdruckleitung 140 einem Bremskraftregler 14 mit einstellbarem Regelverhältnis bereitgestellt wird.

Der Bremskraftregler 14 ist dazu eingerichtet, den bereitgestellten Steuerdruck in Abhängigkeit des eingestellten Regelverhältnisses auf einen Bremsdruck anzupassen und zwei Bremseinrichtung 11A, 11B, die über Bremsdruckleitungen 13A, 13B mit dem Bremskraftregler 14 fluidleitend gekoppelt sind, mit dem Bremsdruck zu beaufschlagen. Die Bremseinrichtungen 11A, 11B sind jeweils einem am Anhängerfahrzeug angeordneten Laufrad 12A, 12B zugeordnet, wobei die Bremseinrichtungen 11A, 11B dazu eingerichtet sind, eine Abbremsung am jeweils zugeordneten Laufrad 12A, 12B in Abhängigkeit des Bremsdrucks zu erzeugen.

Das Bremssystem 10 umfasst darüber hinaus über ein optionales Relais 15 das einerseits bremsdruckleitend bzw. volumenstromleitend mit dem Bremskraftregler 14 und über eine Zusatzleitung 150 mit dem Vorratsdruckspeicher 16 gekoppelt ist. Andrerseits ist das Relais 15 mit den Bremsdruckleitungen 13A, 13B verbunden und dazu eingerichtet, den Bremsdruck mit einem zusätzlichen Volumenstrom eines im Vorratsdruckspeicher 16 bevorrateten Fluids 192 zu beaufschlagen bzw. eine zu den Bremseinrichtungen 11A, 11B geförderte Menge des Fluids 192, insbesondere des Bremsdrucks, zu steigern.

Das Regelverhältnis ist hierbei in einem Bereich zwischen einem oberen und unteren Grenzregelverhältnis des Bremskraftreglers 14 einstellbar. Das obere und untere Grenzregelverhältnis ist dabei abhängig vom jeweiligen Typ des Bremskraftreglers 14 und stellt dabei die minimal und maximal mögliche Anpassung des Steuerdrucks dar. Bei dem dargestellten beispielhaften Bremskraftregler 14 liegt das obere Grenzregelverhältnis bei 1/1, so dass der eingestellte Bremsdruck zumindest nahezu dem bereitgestellten Steuerdruck entspricht. Das untere Grenzregelverhältnis beträgt hierbei beispielhaft 1/4, so dass der ausgesteuerte Bremsdruck um den Faktor 4 kleiner ist als der Steuerdruck. Alternativ zum dargestellten Bremskraftregler 14 sind jedoch auch andere Bremskraftregler mit weiteren Regelverhältnissen denkbar.

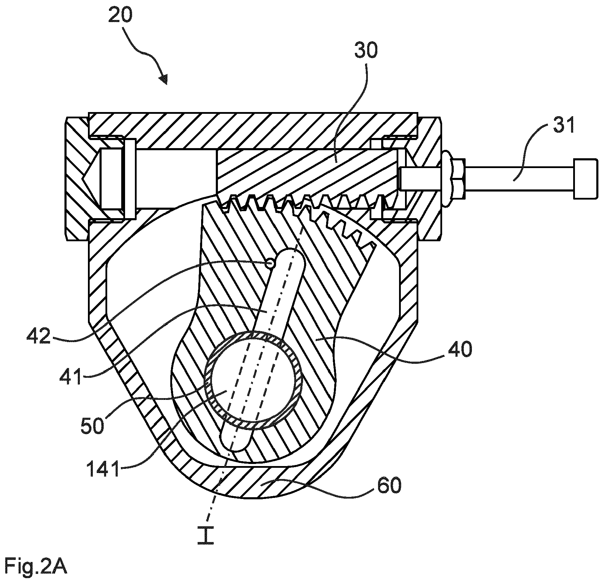

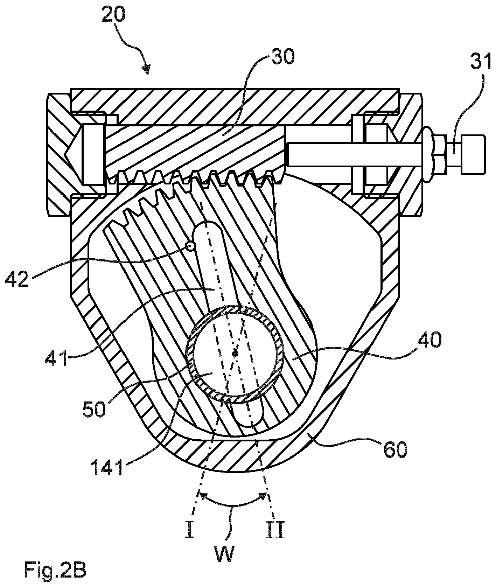

Darüber hinaus ist dem Bremskraftregler 14 eine Verstelleinrichtung 20 gemäß Fig.2A und Fig.2B zugeordnet. Die Verstelleinrichtung 20 ist dazu eingerichtet, dass Regelverhältnis des Bremskraftreglers 14 zwischen dem oberen und unteren Grenzregelverhältnis einzustellen. Hierzu umfasst die Verstelleinrichtung 20 ein rotatorisch verstellbares und mit dem Bremskraftregler 14 gekoppeltes Stellelement 40 und ein translatorisch verschiebbares Schieberelement 30, wobei das Stellelement 40 und das Schieberelement 30 miteinander gekoppelt sind. Alternativ zur dargestellten Ausführungsform kann auch sowohl das Stellelement 40 als auch das Schieberelement 30 translatorisch oder rotatorisch verstellbar sein. Das Stellelement 40 und das Schieberelement 30 weisen hierbei, insbesondere zumindest teilweise an ihrem Umfang verteilt, mehrere Vorsprünge und/oder Hinterschneidungen auf, über die sie formschlüssig miteinander verbunden sind und/oder zumindest teilweise ineinander eingreifen. Das Stellelement 40 ist hierbei zumindest teilweise zahnsegmentförmig ausgebildet, während das Schieberelement 30 zumindest teilweise nach Art einer Zahnstange ausgeführt ist.

Darüber hinaus umfasst die Verstelleinrichtung 20 über ein Gehäuse 60, wobei das Stellelement 40 und/oder das Schieberelement 30 vollständig innerhalb des Gehäuses 60 angeordnet und/oder verstellbar sind. Alternativ hierzu ist denkbar, dass das Stell- und/oder Schieberelement 30, 40 nur teilweise vom Gehäuse 60 umschlossen sind.

Die in den Fig.2A und Fig.2B gezeigte Verstelleinrichtung 20 umfasst ein erstes Einstellmittel 31 und ist insbesondere als ein Regler mit fester Regelkennlinie ausgebildet. Die, insbesondere erste, Stellung in der sowohl das Schieberelement 30 als auch das Stellelement 40 verbringbar sind, ist hierbei über das erste Einstellmittel 31 anpassbar. Die Fig.2A zeigt hierbei eine Verstelleinrichtung 20 mit zumindest nur minimal angepasstem Regelverhältnis des Bremskraftreglers 14. Das erste Einstellmittel 31 ist hierbei mit einem Ende an das Schieberelement 30 angelegt und zusätzlich einschraubbar ausgebildet, wobei das erste Einstellmittel 31 somit dazu eingerichtet ist, das Schieberelement 30 in Richtung der in Fig.2B gezeigten Stellung, insbesondere Position, zu verschieben. Infolge der Verschiebung des Schieberelementes 30 wird auch das Stellelement 40 um einen Verdrehwinkel W verstellt. Der maximale Verdrehwinkel des Stellelementes 40 beträgt hierbei etwa 40°. In einer hierzu alternativen Ausführungsform sind jedoch auch andere maximale Vertsellwinkel denkbar.

Darüber hinaus ist das Stellelement 40 über eine an dem Bremskraftregler 14 angeordnete Einstellwelle 141 form- und/oder kraftschlüssig mit dem Bremskraftregler 14 verbunden. Hierzu ist zwischen der Einstellwelle 141 und dem Stellelement 40 ein erstes Mitnehmer- und/oder Stiftelement 41 angeordnet. Das Stellelement 40 und das die Einstellwelle 141 sind mittels des ersten Mitnehmer- und/oder Stiftelementes 41 kraftübertragend miteinander verbunden. Alternativ oder zusätzlich zum gezeigten Ausführungsbeispiel sind auch andere, insbesondere kraftübertragende, Arten von Verbindungen zwischen dem Stellelement 40 und dem Bremskraftregler 14, insbesondere der Einstellwelle 141, denkbar. Somit ist das Regelverhältnis des Bremskraftreglers 14 über die Einstellwelle 141 und in Abhängigkeit der Stellung des Schieberelementes 30 und/oder des Stellelementes 40, insbesondere dessen Verdrehwinkel W, einstellbar.

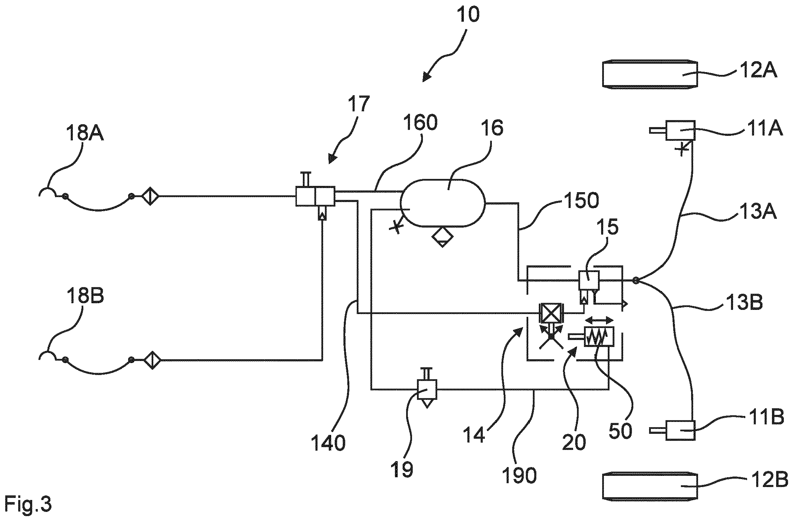

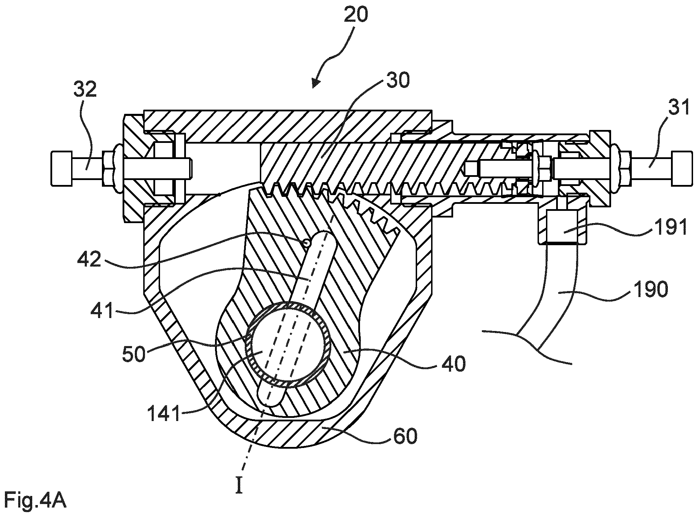

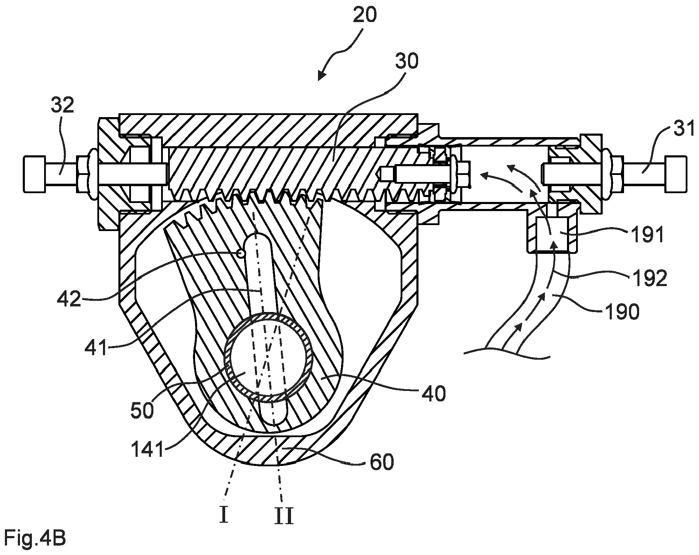

Die Fig.3, 4A und 4B zeigen eine zweite Ausführungsvariante des erfindungsgemäßen Bremssystems 10 bzw. der Verstelleinrichtung 20. Die gleichen Teile wurden hierbei mit gleichen Bezugsziffern gekennzeichnet. Die Ausführungsvarianten entsprechen dem Erfindungsgedanken und sind somit zumindest teilweise gleichartig ausgebildet, wobei im Folgenden im Wesentlichen auf die Unterschiede eingegangen werden soll. Diese Ausführungsvariante des Bremssystems 10 ist innerhalb eines nicht dargestellten land- und/oder fortwirtschaftlichen Anhängerfahrzeuges angeordnet das zumindest eine beladbare und/oder entleerbare Materialaufnahmevorrichtung, insbesondere eine Ladefläche oder einen Tank, umfasst. Das Anhängerfahrzeug ist somit in einem Leerzustand oder einem beladenen Zustand, insbesondere mit einem höheren Gesamtgewicht des Anhängerfahrzeuges, betreibbar. Dementsprechend ist das einstellbare Regelverhältnis des Bremskraftreglers 14 hierbei über eine betätigbare Verstelleinrichtung 20 flexibel auf die unterschiedlichen Zustände des Anhängerfahrzeuges anpassbar.

Hierzu sind das Schieberelement 30 und/oder das Stellelement 40 der in den Figuren 4A und 4B gezeigten Verstelleinrichtung 20 zwischen einer ersten und zweiten Stellung verstellbar. Die erste Stellung gemäß Fig.4A und somit das Regelverhältnis des Bremskraftreglers 14 für den beladenen Zustand des Anhängerfahrzeuges ist über das erste Einstellmittel 31 einstellbar. Zur Anpassung der zweiten Stellung gemäß Fig.4B umfasst die Verstelleinrichtung 20 ein verstellbares zweites, insbesondere als Schraube ausgebildetes, zweites Einstellmittel 32. Die zweite Stellung und das damit zusammenhängend eingestellte Regelverhältnis des Bremskraftreglers 14 sind auf den Leerzustand des Anhängerfahrzeuges angepasst. Der Bremsdruck der Bremseinrichtungen 11A, 11B ist hierbei gegenüber dem Steuerdruck soweit angepasst, insbesondere untersetzt, dass eine gesetzlich vorgegebene Bremswirkung, insbesondere Abbremsung des Anhängerfahrzeuges, erreicht ist.

Die Verstelleinrichtung 20, insbesondere das Schieberelement 30 und/oder das Stellelement 40, ist in diesem Ausführungsbeispiel mit dem Steuerdruck oder einem angepassten Fluiddruck beaufschlagbar und somit fernbetätigt, insbesondere zwischen der ersten und zweiten Stellung, verstellbar. Hierzu umfasst das Bremssystem 10 ein mit dem Vorratsdruckspeicher 16 fluidleitend verbundenes Betätigungsventil 19 das über eine Betätigungsleitung 190 und einen an der Verstelleinrichtung 20 ausgebildeten Fluideingang 191 mit der Verstelleinrichtung 20 verbunden ist. Das Betätigungsventil 19 ist alternativ oder zusätzlich als zumindest ein Wegeventil, insbesondere als 3/2-Wegeventil, ausgebildet und dazu eingerichtet, die Betätigungsleitung 190 und/oder die Verstelleinrichtung 20, insbesondere bei betätigtem Betätigungsventil 19, mit dem Fluid 192 zu beaufschlagen. Somit ist das innerhalb des Vorratsdruckspeichers 16 gespeicherte Fluid 192, insbesondere der damit zusammenhängende Steuer- und/oder Fluiddruck, je nach Bedarf in die Verstelleinrichtung 20 ein- und/oder ausleitbar. Das Betätigungsventil 19 ist hierbei über eine nicht dargestellte Signalleitung von einem Bediener, insbesondere manuell, und/oder einem dem Anhängerfahrzeug zugeordneten Steuer- und/oder Regelsystem, insbesondere automatisiert, betätigbar. Alternativ oder zusätzlich ist der Materialaufnahmevorrichtung eine Füllstandserfassungseinrichtung, insbesondere ein Füllstandssensor, zugeordnet die mit dem Steuer- und/oder Regelsystem und/oder der Verstelleinrichtung 20, insbesondere dem Betätigungsventil 19, gekoppelt ist und dazu eingerichtet ist, die Verstelleinrichtung 20, insbesondere das Betätigungsventil 19, und/oder das Stell- und/oder Schieberelement 30, 40 zu betätigen und/oder zu verstellen. Ferner ist alternativ oder zusätzlich ein an dem Betätigungsventil 19 und/oder der Verstelleinrichtung 20 ausgebildetes Bedienmittel, insbesondere ein Hebel, zur Anpassung der Stellung des Schieberelementes 30 und/oder Stellelementes 40 denkbar, der von dem Bediener manuell betätigbar und/oder verstellbar ist.

Alternativ oder zusätzlich zur dargestellten Ausführungsform sind auch andere Varianten zur Fernbetätigung der Verstelleinrichtung 20, insbesondere des Stellelementes 40 und/oder des Scheberelementes 30, denkbar. Hierbei kann der Verstelleinrichtung 20 beispielsweise ein motorisch antreibbares Stellglied und/oder ein Arbeitszylinder zugeordnet sein der dazu eingerichtet ist, die Verstelleinrichtung 20, insbesondere das Stellelement 40 und/oder das Schieberelement 30 zwischen der ersten und zweiten Stellung, zu verstellen.

Darüber hinaus umfassen die in den Fig. 2A, 2B und Fig. 4A, 4B gezeigten Varianten der Verstelleinrichtung 20 ein dem Stellelement 40 und/oder dem Schieberelement 30 zugeordnete Rückstelleinrichtung 50, insbesondere ein Federelement, das dazu eingerichtet ist, dass Stellelement 40 und/oder das Schieberelement 30 in einer definierten Richtung zu verstellen und/oder vorzuspannen. Das Federelement 50 ist hierbei beispielhaft zwischen dem Bremskraftregler 14, insbesondere der Einstellwelle 141, und dem Stellelement 40 angeordnet. Innerhalb der Verstelleinrichtung 20 ist ferner ein zweites Mitnehmer- und/oder Stiftelement 42 angeordnet das auf der einen Seite mit dem Stellelement 40, insbesondere zumindest teilweise innerhalb des Stellelementes 40 angeordnet, und auf der anderen Seite mit dem Federelement 50 gekoppelt ist. Das Federelement 50 ist dabei dazu eingerichtet, das Stellelement 40 und/oder das Schieberelement 30 in Richtung der ersten Stellung zu verstellen und/oder vorzuspannen. Somit ist mittels des Federelements 50 erreicht, dass bei einer Betriebsstörung innerhalb des Bremssystems 10 und/oder der Verstelleinrichtung 20 stets die erste Stellung und somit das, insbesondere höhere, Regelverhältnis für den beladenen Zustand des Anhängerfahrzeuges eingestellt wird.

Bei der in den Fig. 4A, 4B gezeigten Variante ist mittels des Federelementes 50 alternativ oder zusätzlich erreicht, dass das Fluid 192, insbesondere der Steuer- und/oder Fluiddruck, bei einem nicht betätigten Betätigungsventil 19 und/oder nicht betätigter Verstelleinrichtung 20 über den Fluideingang 191 und/oder eine nicht dargestellte Entlüftung aus der Verstelleinrichtung 20 ausgeleitet wird.

Alternativ oder zusätzlich zur gezeigten Ausführungsform kann die Rückstelleinrichtung 50, insbesondere das Federelement, innerhalb des Bremskraftreglers 14 angeordnet, insbesondere mit der Einstellwelle 141 gekoppelt, sein.

Ferner umfasst die Verstelleinrichtung 20 hierbei innerhalb des Gehäuses 60 angeordnete, jedoch nicht dargestellte, gas- und/oder flüssigkeitsdichte Abdichtmittel. Somit ist erreicht, dass zum einen zumindest nahezu kein Fluid 192, insbesondere Steuer- und/oder Fluiddruck, aus der Verstelleinrichtung 20 austreten kann und zum anderen das Stell- und/oder Schieberelement 30, 40 vor äußeren Einflüssen geschützt ist.

### Bezugszeichenliste

- 10: Bremssystem
- 11A, 11B: Bremseinrichtung
- 12A, 12B: Laufrad
- 13A, 13B: Bremsdruckleitung
- 14: Bremskraftregler
- 140: Steuerdruckleitung
- 141: Einstellwelle
- 15: Relais
- 150: Zusatzleitung
- 16: Vorratsdruckspeicher
- 160: Speicherdruckzuleitung
- 17: Löseventil
- 18A: Vorratskupplung
- 18B: Bremskupplung
- 19: Betätigungsventil
- 190: Betätigungsleitung
- 191: Fluideingang
- 192: Fluid
- 20: Verstelleinrichtung
- 30: Schieberelement
- 31: Erstes Einstellmittel
- 32: Zweites Einstellmittel
- 40: Stellelement
- 41: Erstes Mitnehmer- und/oder Stiftelement
- 42: Zweites Mitnehmer- und/oder Stiftelement
- 50: Rückstelleinrichtung, Federelement
- 60: Gehäuse

- W: Verstellwinkel

## Patentansprüche

1. Pneumatisch und/oder hydraulisch betreibbares Bremssystem (10), umfassend
- zumindest eine Bremseinrichtung (11A, 11B) die mit einem Laufrad (12A, 12B) koppelbar und mit einem Bremsdruck beaufschlagbar ist, wobei die Bremseinrichtung (11A, 11B) dazu eingerichtet ist, eine Abbremsung in Abhängigkeit des Bremsdrucks zu erzeugen, und
- zumindest ein Bremskraftregler (14) mit einstellbarem Regelverhältnis der mit einem Steuerdruck beaufschlagbar und dazu eingerichtet ist, den Bremsdruck in Abhängigkeit des Steuerdrucks und des Regelverhältnisses einzustellen,
**dadurch gekennzeichnet, dass** das Regelverhältnis zwischen einem oberen und unteren Grenzregelverhältnis einstellbar ist; dass dem Bremskraftregler (14) zumindest eine Verstelleinrichtung (20) zugeordnet ist die dazu eingerichtet ist, dass Regelverhältnis zwischen dem oberen und unteren Grenzregelverhältnis einzustellen.

2. Bremssystem (10) nach Anspruch 1, **dadurch gekennzeichnet, dass** die Verstelleinrichtung (20) zumindest ein, vorzugsweise rotatorisch, verstellbares mit dem Bremskraftregler (14) verbundenes Stellelement (40) und zumindest ein, vorzugsweise translatorisch, verstellbares Schieberelement (30) aufweist; wobei das zumindest eine Stellelement (40) und das zumindest eine Schieberelement (30) miteinander gekoppelt sind.

3. Bremssystem (10) nach Anspruch 2, **dadurch gekennzeichnet, dass** das Schieberelement (30) und das Stellelement (40) zumindest teilweise formschlüssig miteinander verbunden sind.

4. Bremssystem (10) nach zumindest einem der vorgenannten Ansprüche 2 und/oder 3, **dadurch gekennzeichnet, dass** das zumindest eine Stellelement (40) und/oder das zumindest eine Schieberelement (30) in einer ersten und/oder zweiten Stellung verbringbar sind und das Regelverhältnis, insbesondere zwischen dem oberen und unteren Grenzregelverhältnis, in Abhängigkeit der Stellung einstellbar ist.

5. Bremssystem (10) nach Anspruch 4, **dadurch gekennzeichnet, dass** die Verstelleinrichtung (20) zumindest ein erstes Einstellmittel (31) aufweist, wobei die erste Stellung mittels des ersten Einstellmittels (31) anpassbar ist.

6. Bremssystem (10) nach zumindest einem der vorgenannten Ansprüche 4 und/oder 5, **dadurch gekennzeichnet, dass** die Verstelleinrichtung (20) zumindest ein zweites Einstellmittel (32) aufweist, wobei die zweite Stellung mittels des zweiten Einstellmittels (32) anpassbar ist.

7. Bremssystem (10) nach zumindest einem der vorgenannten Ansprüche 2 bis 6, **dadurch gekennzeichnet, dass** das Stellelement (40) und/oder das Schieberelement (30) fernbetätigt, vorzugsweise mittels eines Fluids (192) oder Aktors, verstellbar sind.

8. Bremssystem (10) nach zumindest einem der vorgenannten Ansprüche 2 bis 7, **dadurch gekennzeichnet, dass** dem Stellelement (40) und/oder Schieberelement (30) zumindest ein Federelement (50) zugeordnet ist das dazu eingerichtet ist, dass Stellelement (40) und/oder Schieberelement (30), vorzugsweise in eine definierte Richtung, zu verstellen.

9. Bremssystem (10) nach zumindest einem der vorgenannten Ansprüche 2 bis 8, **dadurch gekennzeichnet, dass** das zumindest eine Stellelement (40) form- und/oder kraftschlüssig mit dem Bremskraftregler (14) verbindbar ist.

10. Bremssystem (10) nach zumindest einem der vorgenannten Ansprüche 2 bis 9, **dadurch gekennzeichnet, dass** die Verstelleinrichtung (20) zumindest ein Gehäuse (60) umfasst; und dass das zumindest eine Stellelement (40) und das zumindest eine Schieberelement (30) zumindest teilweise, vorzugsweise vollständig, innerhalb des Gehäuses (60) angeordnet sind.

11. Land- und/oder forstwirtschaftliches Anhängerfahrzeug mit
- zumindest einem Laufrad (12A, 12B); und
- einem Bremssystem (10), mit welchem das zumindest eine Laufrad (12A, 12B) gekoppelt ist;
**dadurch gekennzeichnet, dass** das Bremssystem (10) nach zumindest einem der vorstehenden Ansprüche ausgebildet ist.

12. Land- und/oder forstwirtschaftliches Anhängerfahrzeug nach Anspruch 11, umfassend zumindest eine beladbare und/oder entleerbare Materialaufnahmevorrichtung, **dadurch gekennzeichnet, dass** die Verstelleinrichtung (20), insbesondere das zumindest eine Stellelement (40) und/oder Schieberelement (30), in Abhängigkeit des Beladungszustandes der Materialaufnahmevorrichtung verstellbar sind.
